# EUROPEAN PATENT SPECIFICATION

(11) **EP 1 148 032 B1**
(45) Date of publication and mention of the grant of the patent: **17.08.2005**
(21) Application number: 01109337.4
(22) Date of filing: 12.04.2001
(51) Int. Cl.: C02F 1/48, B65D 23/04, B65D 25/48

(54) **Spout with means for applying a spinning motion to the fluid flow and for magnetizing the poured liquid**
Ausgiesser mit Vorrichtung, die der ausfliessenden Flüssigkeit eine Schraubenbewegung verleiht sowie zum magnetisieren derselbigen
Verseur avec des moyens pour appliquer un mouvement hélicoidal au flux de liquide et pour le magnétiser

(30) Priority: 18.04.2000 IT PD000099
(43) Date of publication of application: 24.10.2001
(73) Proprietor: Previato, Stanis, 35048 Stanghella (Prov. of Padova) (IT)
(72) Inventor: Previato, Stanis, 35048 Stanghella (Prov. of Padova) (IT)
(74) Representative: Modiano, Guido, Dr.-Ing.

(56) References cited:
- DE-A- 19 810 283
- FR-A- 2 531 932
- GB-A- 2 001 610

## Description

The present invention relates to a device for magnetizing and dynamizing liquid flowing out of an outlet during pouring.

Devices to be used whenever one wishes to magnetically charge water in order to improve its biological function (for calcium carbonate reduction) and its organoleptic pleasantness are already known.

Since living organisms are constituted for at least 70-80% by water, the biological qualities of magnetized water are very important for them.

Such water in fact retains its chemical composition (especially its acid-base equilibrium) but varies its physical properties for at least 5 days.

In practice, by passing a stream of water at ambient temperature through the gap of two magnets having opposite polarities an electromagnetic force is induced in the water, since the stream of liquid crosses the lines of force of the radial emission field of the magnets.

The magnetized water acquires the property of preventing the formation of calcium carbonate microcrystals, since calcite (having three magnetic axes), which is abundantly present in water, is converted into microcrystals of aragonite (having a single magnetic axis), which are eliminated fully as amorphous sludge by emunctory pathways (especially through the kidneys).

The conversion of these microcrystals is a function of the equilibrium of the electric charges of the calcium, magnesium and silicon ions that are present in the water, which accordingly acquires a true magnetic memory having a descaling and litholytic action (which resolves the calcium carbonate deposits of living organisms), with a consequent organoleptic softening for excessively hard water while maintaining its initial pH.

A conventional magnetizing device is disclosed in French patent No. 2531932, which discloses an externally conical rubber body to be partially inserted in the outlet of the neck of a bottle or the like and is provided with an axial hole through which the liquid can be poured.

The rubber body includes magnetic plates which face the liquid passage hole.

This conventional device achieves a limited effect, owing to the fact that the liquid is made to pass through a limited cross-section and this causes pouring problems, since it is known that in order to allow a liquid to be emptied from a container it is necessary to transfer air into the volume that the liquid occupies.

In the case of the above-described device, the passage cross-section is so small that very little air is able to flow from the outside inward and accordingly very little liquid can flow in the opposite direction.

These difficulties in the flow of the liquid of course have negative consequences on the magnetization action that the device should perform.

A permanent magnetic liquid treatment device for avoiding the formation of lime deposits at the inner wall of pipes or tanks is disclosed in DE-198 10 283 A1. Such device comprises a stack of ring magnets and magnetizable spacer discs located coaxially to a longitudinal inner tube, which contains a strip of magnetizable, non-rusting metal which is coiled for producing a screw motion in the liquid passing through the inner tube.

The aim of the present invention is to provide a device which can eliminate the drawbacks noted above of conventional devices.

Within this aim, a consequent primary object of the present invention is to provide a dynamization of the liquid flowing out of an outlet, so as to improve its biological function and organoleptic pleasantness.

Another important object of the invention is to provide a device which is portable and therefore adaptable to a large number of bottle-like containers, is lightweight and maintenance-free, and has substantially unlimited durability.

Another object of the present invention is to provide a device which can be mass-produced and marketed at low cost.

This aim and these and other objects which will become better apparent hereinafter are achieved by a device for magnetizing and dynamizing liquid flowing out of a neck of a bottle during pouring according to claim 1.

Further characteristics and advantages of the invention will become better apparent from the detailed description of an embodiment thereof, illustrated only by way of non-limitative example in the accompanying drawings, wherein:
Figure 1 is a sectional view of the device during pouring, in a first embodiment thereof;
Figure 2 is an external perspective view of the device of Figure 1;
Figure 3 is an exploded perspective view of the device of Figure 2;
Figure 4 is a sectional view of the device in a second embodiment thereof.

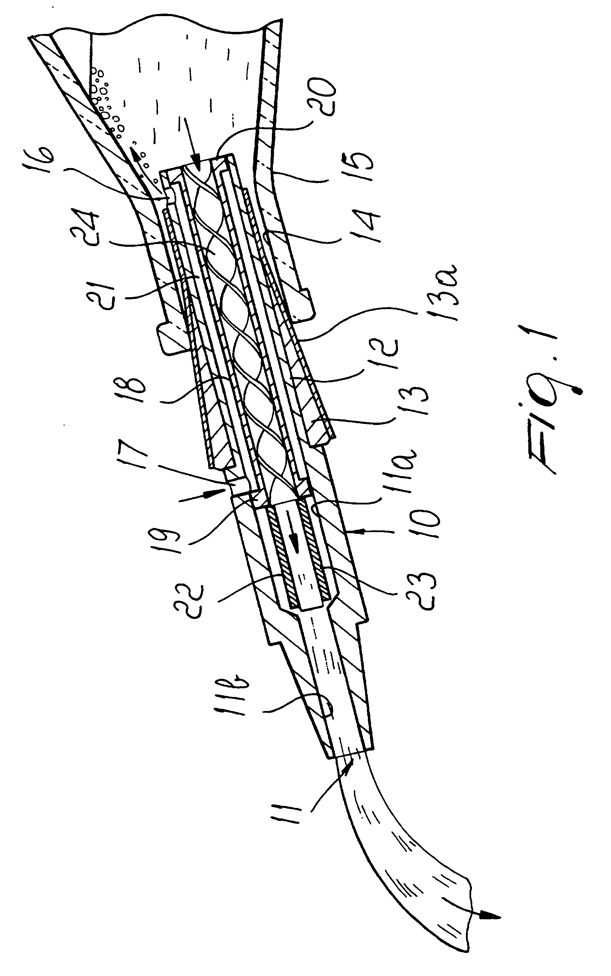

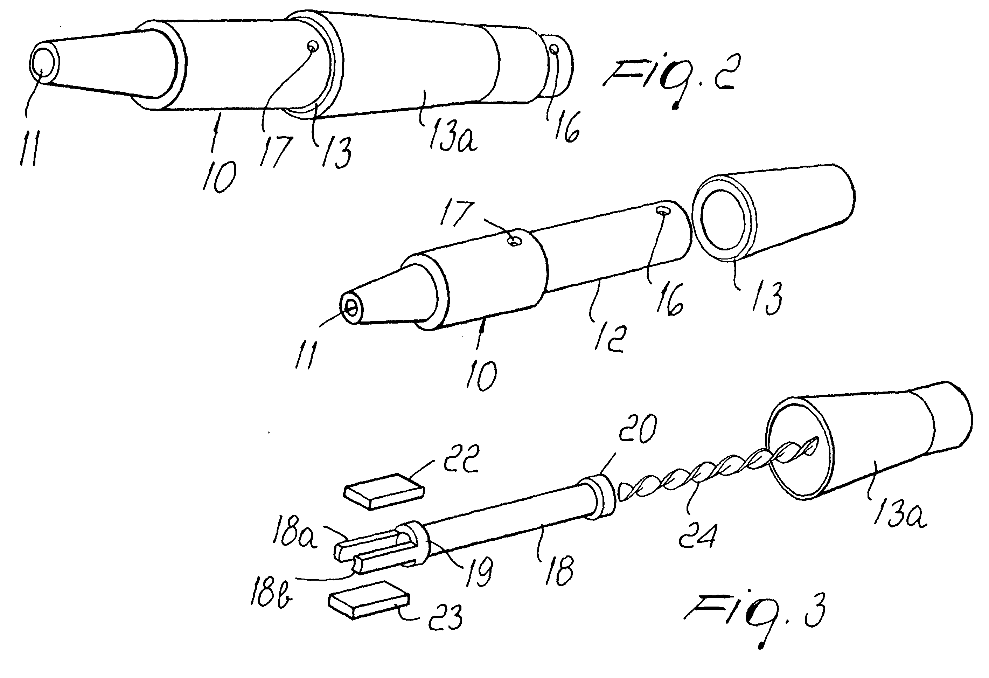

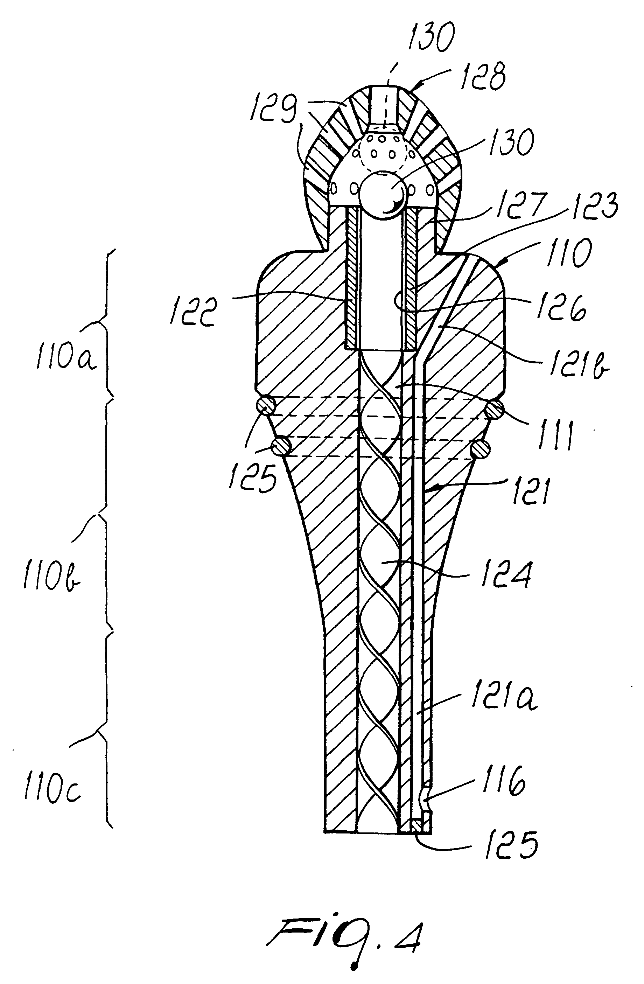

With reference to Figures 1 to 3, a device for magnetizing and dynamizing liquid which flows out of an outlet during pouring, in a first embodiment, comprises a body 10 made of nonmagnetic material, for example aluminum, which is provided with an axial through hole 11 formed by two portions 11a and 11b, of which the first one has a larger diameter than the second one.

The body 10 has, on the outside of the part provided with the hole 11, in the larger portion 11a, a thinner region 12 which is surrounded by an element 13 made of soft material, such as food-compatible rubber, which is axially perforated and has a conical outer shape in order to adapt to the various widths of an outlet 14, for example the neck of a bottle 15.

The element 13 is covered with an external element 13a.

Adjacent to the two ends of the element 13, the body 10 has respective radial holes 16 and 17 which connect the inside to the outside.

A tubular element 18 made of nonmagnetic material, such as aluminum, is inserted in the larger-diameter portion 11a of the hole 11; said tubular element has a smaller diameter than the portion 11a and is provided with two flanges, designated by the reference numerals 19 and 20 respectively, which have the same diameter as the portion 11a so as to form an interspace 21 which is connected to the outside by means of the radial holes 16 and 17.

When the body 10 is partially inserted in the neck of the bottle 15, one of said holes lies inside the bottle 15 and one lies outside it.

Two bars, designated by the reference numerals 22 and 23 respectively, of permanent magnets arranged with radially opposite polarities are coupled (glued) to the tubular element 18, between the flange 19 (the one that lies furthest inside the body 10) and the tip, at corresponding cutouts 18a and 18b.

The tubular element 18 has, substantially along its entire extension between the inlet and the region of the bars 22 and 23, a lamina 24 made of nonmagnetic material which is shaped like a left-handed helix and is adapted to induce a rotational component in the liquid that flows through.

As regards operation, the body 10 is inserted with the element 13 in the neck of the bottle 15, and the material that constitutes the element 13 is fixed to the bottle by way of its adaptability.

At this point, one merely has to pour the liquid, which is forced to pass first through the region where the helical lamina 24 is arranged and then between the bars 22 and 23.

The interspace 21 and the radial holes 16 and 17 maintain the pressure balance between the inside of the bottle 15 and the outside atmosphere and facilitate the outflow of the liquid: the passing liquid is thus dynamized due to the rotational component induced therein and is charged magnetically.

The greater or smaller inclination of the bottle varies the dynamic conditions inside the device due to the greater or smaller incidence, on the passage portion, of the weight of the liquid contained in the bottle.

The dynamization and magnetization of the liquid, particularly of its aqueous component, improve its biological function and organoleptic pleasantness.

Figure 4 illustrates a device for magnetizing and dynamizing liquid flowing out of an outlet during pouring, in a second embodiment thereof, which comprises a body 110 made of nonmagnetic material, for example aluminum, which is provided with an axial through hole 111.

The body 110 is constituted by a first enlarged portion 110a to be arranged outside the outlet, by a second tapering and substantially conical portion 110b, and by a third longitudinally elongated portion 110c to be arranged inside the outlet.

The shape of the second portion 110b allows the body 110 to be adapted to outlets of different sizes.

The second portion 110b is further provided externally with O-ring gaskets 125 which are arranged so as to be spaced and coaxial, so as to allow hermetic adaptability of the device to outlets of different sizes.

The body 110 has a through duct 121 which is adapted to maintain the pressure balance between the inside and the outside of the outlet, which has a portion 121a which is straight and parallel to the through hole 111, passes through the third portion 110c and the second portion 110b of the body 110, and ends with a portion 121b which is inclined at the first portion 121a.

The portion 121a of the duct 121 is provided with a plug 125 at the third portion 110c, but is still connected to the outside by means of a radial hole 116 provided in the third portion 110c.

A lamina 124 made of nonmagnetic material is inserted in the axial hole 111, is shaped like a left-handed helix and is adapted to induce a rotational component in the passing liquid.

The lamina 124 runs from the third portion 110c to the first portion 110a, at two bars, designated by the reference numerals 122 and 123 respectively, of permanent magnets which are arranged with radially opposite polarities and between which the liquid to be poured passes.

Advantageously, the bars 122 and 123 cannot make contact with the liquid by way of the interposition of a tubular segment 126 made of nonmagnetic material, which provides a continuous passage together with the axial hole 111.

At the front, the first portion 110a of the body 110 has a coupling portion 127 for a cap-shaped head 128 which is made of nonmagnetic material and is provided with a plurality of radial holes 129 for the passage of liquid.

Inside the head 128 there is a glass or silver ball 130 which plugs the axial hole 111 when the device is arranged vertically, with the first portion 110a facing upward.

In practice it has been observed that the intended aim and objects of the present invention have been achieved.

The invention thus conceived is susceptible of numerous modifications and variations, all of which are within the scope of the inventive concept.

Moreover, all the details may be replaced with other technically equivalent elements.

In practice, the materials employed, so long as they are compatible with the contingent use, as well as the dimensions, may be any according to requirements.

The disclosures in Italian Patent Application No. PD2000A000099, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A device for magnetizing and dynamizing liquid flowing out of a neck of a bottle during pouring, comprising an axially perforated body (10;110) made of nonmagnetic material which is meant to be inserted at least partially in the neck and is internally provided with permanent magnets (22,23;122,123) which face, with opposite polarities, the region where the liquid passes during pouring, said device being **characterized in that** a helical element (24;124) is present in said body (10;110), in a liquid passage hole (11;111), for inducing a rotational component in the passing liquid before the liquid passes in the region faced by said permanent magnets, and **in that** said body (10;110) comprises a through duct (16,17,21;116,121) adapted to maintain the pressure balance between the inside and the outside of said neck.

2. The device according to claim 1, **characterized in that** said helix is left-handed.

3. The device according to one or more of the preceding claims, **characterized in that** said helical element (24;124) runs from the inlet of said device to said magnets (22,23;122,123).

4. The device according to one or more of the preceding claims, **characterized in that** it is externally provided with a conical element (13) made of elastomer which can be adapted to necks having different widths.

5. The device according to one or more of the preceding claims, **characterized in that** said body (10) is provided with an axial through hole (11) which has two portions, the first portion (11a) having a larger diameter than the second portion (11b).

6. The device according to one or more of the preceding claims, **characterized in that** said body (10) has, on the outside of the part provided with said hole (11), in its larger portion (11a), a narrower region (12) which is surrounded by said conical element (13) made of soft material, such as food-compatible rubber, which is axially perforated.

7. The device according to one or more of the preceding claims, **characterized in that** the body (10) has, adjacent to the two ends of said conical element, respective radial holes (16, 17) which connect the inside to the outside of said neck.

8. The device according to one or more of the preceding claims, **characterized in that** a tubular element (18) made of nonmagnetic material is inserted in the larger-diameter portion (11a) of said hole (11), has a smaller diameter than the corresponding hole portion (11a) of said body, and is provided with two flanges (19,20) whose diameter is equal to the diameter of the portion (11a) in order to form an interspace (21) which is connected to the outside by means of said radial holes (16,17).

9. The device according to one or more of the preceding claims, **characterized in that** said tubular element (18) has, between the flange (19) that lies furthest inside said body (10) and the tip, two bars of permanent magnets (22,23) which are coupled thereto, are located at corresponding cutouts (18a,18b) and are arranged with radially opposite polarities.

10. The device according to claims 1 to 3, **characterized in that** said body (110) is constituted by a first enlarged portion (110a), which is meant to be arranged outside the neck, by a second tapering portion (110b), which is substantially conical, and by a third portion (110c), which is substantially longitudinal and is meant to be arranged inside the neck.

11. The device according to claim 10, **characterized in that** said second portion (110b) is externally provided with O-ring gaskets (125) which are arranged coaxially and are mutually spaced, in order to allow the hermetic adaptability of the device to necks of different sizes.

12. The device according to claims 10 and 11, **characterized in that** said through duct (121) comprises a straight portion (121a) which is parallel to said axial through hole (111) and passes through the third portion (110c) and the second portion (110b) of said body, and ending with an inclined portion (121b) at said first portion (110a).

13. The device according to claim 12, **characterized in that** said straight portion (121a) of the duct (121) is provided with a plug (125) at said third portion (110c) and is nonetheless connected to the outside by means of a radial hole (116) formed in said third portion.

14. The device according to one or more of claims 10 to 13, **characterized in that** said first portion (110a) is provided, at the front, with a coupling portion (127) for a cap-shaped head (128) made of nonmagnetic material, provided with a plurality of radial holes (129) for the passage of liquid.

15. The device according to claim 14, **characterized in that** inside said head (128) there is a ball (130), made of glass or silver, which plugs the axial hole (111) when said device is arranged vertically, with its first portion (110a) facing upward.

16. The device according to one or more of the preceding claims, **characterized in that** it comprises a tubular segment (126) made of nonmagnetic material which is arranged at said permanent magnet bars (122,123) and is adapted to prevent contact between said bars (122,123) and the liquid.

## Patentansprüche

1. Vorrichtung zum Magnetisieren und Dynamisieren von Flüssigkeit, die beim Ausgießen aus einem Flaschenhals fließt, umfassend einen axial perforierten Körper (10; 110) aus nichtmagnetischem Material, der dazu bestimmt ist, zumindest teilweise in den Hals eingesetzt zu werden, und im Inneren mit Permanentmagneten (22, 23; 122, 123) versehen ist, die mit entgegengesetzten Polaritäten dem Bereich zugewandt sind, den die Flüssigkeit beim Ausgießen durchströmt, wobei die genannte Vorrichtung **dadurch gekennzeichnet ist, dass** ein spiralförmiges Element (24; 124) in einem Flüssigkeitsdurchgangsloch (11; 111) in dem genannten Körper (10; 110) vorhanden ist, um in der durchströmenden Flüssigkeit eine Drehkomponente zu induzieren, bevor die Flüssigkeit in den Bereich strömt, dem die genannten Permanentmagneten zugewandt sind, und dass der genannte Körper (10; 110) einen durchgehenden Kanal (16, 17, 21; 116, 121) umfasst, der dazu ausgebildet ist, das Druckgleichgewicht zwischen den Innenseite und der Außenseite des genannten Halses aufrechtzuerhalten.

2. Vorrichtung nach Anspruch 1, **dadurch gekennzeichnet, dass** die genannte Spirale linksgängig ist.

3. Vorrichtung nach einem oder mehreren der vorhergehenden Ansprüche, **dadurch gekennzeichnet, dass** das genannte spiralförmige Element (24; 124) vom Einlass der genannten Vorrichtung zu den Magneten (22, 23; 122, 123) verläuft.

4. Vorrichtung nach einem oder mehreren der vorhergehenden Ansprüche, **dadurch gekennzeichnet, dass** sie außen mit einem aus einem Elastomer hergestellten konischen Element (13) versehen ist, welches sich an Hälse mit unterschiedlichen Breiten anpassen kann.

5. Vorrichtung nach einem oder mehreren der vorhergehenden Ansprüche, **dadurch gekennzeichnet, dass** der genannte Körper (10) mit einem axialen Durchgangsloch (11) versehen ist, das zwei Abschnitte hat, wobei der erste Abschnitt (11a) einen größeren Durchmesser hat als der zweite Abschnitt (11b).

6. Vorrichtung nach einem oder mehreren der vorhergehenden Ansprüche, **dadurch gekennzeichnet, dass** der genannte Körper (10) an der Außenseite des Teils, der mit dem genannten Loch (11) versehen ist, in seinem größeren Abschnitt (11a) einen engeren Bereich (12) hat, der von dem aus einem weichen Material, wie einem nahrungsmittelverträglichen Gummi, hergestellten konischen Element (13) umgeben ist, das axial perforiert ist.

7. Vorrichtung nach einem oder mehreren der vorhergehenden Ansprüche, **dadurch gekennzeichnet, dass** der Körper (10) neben den zwei Enden des genannten konischen Elements entsprechende radiale Löcher (16, 17) hat, die die Innenseite mit der Außenseite des genannten Halses verbinden.

8. Vorrichtung nach einem oder mehreren der vorhergehenden Ansprüche, **dadurch gekennzeichnet, dass** ein röhrenförmiges Element (18) aus nichtmagnetischem Material in den Abschnitt (11a) mit größerem Durchmesser des genannten Lochs (11) eingesetzt ist, einen kleineren Durchmesser hat als der entsprechende Lochabschnitt (11a) des genannten Körpers und mit zwei Flanschen (19, 20) versehen ist, deren Durchmesser gleich dem Durchmesser des Abschnitts (11a) ist, um einen Zwischenraum (21) zu bilden, welcher durch die genannten radialen Löcher (16, 17) mit der Außenseite verbunden ist.

9. Vorrichtung nach einem oder mehreren der vorhergehenden Ansprüche, **dadurch gekennzeichnet, dass** das genannte röhrenförmige Element (18) zwischen dem Flansch (19), der am Weitesten im Inneren des genannten Körpers (10) liegt, und der Spitze zwei Stangen aus Permanentmagneten (22, 23) hat, die daran gekoppelt, an entsprechenden Ausschnitten (18a, 18b) positioniert und mit radial entgegengesetzten Polaritäten angeordnet sind.

10. Vorrichtung nach den Ansprüchen 1 bis 3, **dadurch gekennzeichnet, dass** der genannte Körper (110) aus einem ersten vergrößerten Abschnitt (110a), der dazu bestimmt ist, außerhalb des Halses angeordnet zu werden, einem zweiten sich verjüngenden Abschnitt (110b), der im Wesentlichen konisch ist, und einem dritten Abschnitt (110c), der sich im Wesentlichen in Längsrichtung erstreckt und dazu bestimmt ist, im Inneren des Halses angeordnet zu werden, gebildet ist.

11. Vorrichtung nach Anspruch 10, **dadurch gekennzeichnet, dass** der genannte zweite Abschnitt (110b) außen mit O-Ringdichtungen (125) versehen ist, die koaxial und mit wechselseitigem Abstand angeordnet sind, um eine hermetische Anpassung der Vorrichtung an Hälsen unterschiedlicher Größen zu erlauben.

12. Vorrichtung nach Anspruch 10 und 11, **dadurch gekennzeichnet, dass** der genannte durchgehende Kanal (121) einen geraden Abschnitt (121a) umfasst, der parallel ist zu dem genannten axialen Durchgangsloch (111) und durch den dritten Abschnitt (110c) und den zweiten Abschnitt (110b) des genannten Körpers geht und mit einem geneigten Abschnitt (121b) im genannten ersten Abschnitt (110a) endet.

13. Vorrichtung nach Anspruch 12, **dadurch gekennzeichnet, dass** der genannte gerade Abschnitt (121a) des Kanals (121) am genannten dritten Abschnitt (110c) mit einem Stopfen (125) versehen und dennoch mittels eines radialen Lochs (116) mit der Außenseite verbunden ist, das in dem genannten dritten Abschnitt ausgebildet ist.

14. Vorrichtung nach einem oder mehreren der Ansprüche 10 bis 13, **dadurch gekennzeichnet, dass** der genannte erste Abschnitt (110a) an der Vorderseite mit einem Kopplungsabschnitt (127) für einen aus nichtmagnetischem Material hergestellten kappenförmigen Kopf (128) versehen ist, der mehrere radiale Löchern (129) für den Durchgang von Flüssigkeit aufweist.

15. Vorrichtung nach Anspruch 14, **dadurch gekennzeichnet, dass** im Inneren des genannten Kopfes (128) eine aus Glas oder Silber bestehende Kugel (130) vorhanden ist, die das axiale Loch (111) verschließt, wenn die genannte Vorrichtung vertikal angeordnet wird, wobei ihr erster Abschnitt (110a) nach oben weist.

16. Vorrichtung nach einem oder mehreren der vorhergehenden Ansprüche, **dadurch gekennzeichnet, dass** sie ein aus nichtmagnetischem Material hergestelltes röhrenförmiges Segment (126) umfasst, das an den genannten Permanentmagnetstäben (122, 123) angeordnet und dazu ausgebildet ist, einen Kontakt zwischen den genannten Stäben (122, 123) und der Flüssigkeit zu verhindern.

## Revendications

1. Dispositif pour magnétiser ou dynamiser un liquide s'écoulant du goulot d'une bouteille au cours d'un versement, comprenant un corps perforé axialement (10; 110) formé d'un matériau non magnétique qui est destiné à être inséré au moins en partie dans le goulot et est pourvu de façon interne d'aimants permanents (22, 23; 122, 123) qui sont tournés, avec des polarités opposées, vers la région dans laquelle passe le liquide en cours d'un déversement, ledit dispositif étant **caractérisé en ce qu'**un élément hélicoïdal (24; 124) est présent dans ledit corps (10; 110), dans un trou de passage de liquide (11; 111) pour induire une composante rotative dans le liquide de passage avant que le liquide ne passe dans la région tournée vers lesdits aimants permanents, et **en ce que** ledit corps (10; 110) comprend un conduit traversant (16, 17, 21; 116, 121) qui est à même de maintenir l'équilibre de pression entre l'intérieur et l'extérieur dudit goulot.

2. Dispositif selon la revendication 1, **caractérisé en ce que** ladite hélice est à gauche.

3. Dispositif selon une ou plusieurs des revendications précédentes, **caractérisé en ce que** ledit élément hélicoïdal (24; 124) s'étend de l'entrée dudit dispositif auxdits aimants (22, 23; 122, 123).

4. Dispositif selon une ou plusieurs des revendications précédentes, **caractérisé en ce qu'**il est extérieurement muni d'un élément conique (13) formé d'un élastomère qui peut être à même de s'adapter à des goulots de différentes largeurs.

5. Dispositif selon une ou plusieurs des revendications précédentes, **caractérisé en ce que** ledit corps (10) est muni d'un trou axial traversant (11) qui a deux parties, la première partie (11a) ayant un diamètre plus grand que la seconde partie (11b).

6. Dispositif selon une ou plusieurs des revendications précédentes, **caractérisé en ce que** ledit corps (10) a, à l'extérieur de la partie munie dudit trou (11), dans sa partie plus grande (11a), une région plus étroite (12) qui est entourée par ledit élément conique (13) formé d'un matériau souple, tel que du caoutchouc alimentaire, qui est axialement perforé.

7. Dispositif selon une ou plusieurs des revendications précédentes, **caractérisé en ce que** le corps (10) a, à proximité des deux extrémités dudit élément conique, des trous radiaux respectifs (16, 17) qui raccordent l'intérieur à l'extérieur dudit goulot.

8. Dispositif selon une ou plusieurs des revendications précédentes, **caractérisé en ce qu'**un élément tubulaire (18) formé d'un matériau non magnétique est inséré dans la partie de diamètre plus grand (11a) dudit trou (11), a un diamètre inférieur à la partie de trou correspondante (11a) dudit corps et est muni de deux brides (19,20) dont le diamètre est égal au diamètre de la partie (11a) pour former un espace intermédiaire (21) qui est raccordé à l'extérieur au moyen desdits trous radiaux (16,17).

9. Dispositif selon une ou plusieurs des revendications précédentes, **caractérisé en ce que** ledit élément tubulaire (18) a, entre la bride (19) qui se trouve le plus à l'intérieur dudit corps (10) et la pointe, deux barreaux d'aimants permanents (22,23) qui lui sont couplés, se trouvent au niveau de découpes correspondantes (18a, 18b) et sont aménagés avec des polarités radialement opposées.

10. Dispositif selon les revendications 1 à 3, **caractérisé en ce que** ledit corps (110) est constitué d'une première partie agrandie (110a), destinée à être aménagée à l'extérieur du goulot, d'une deuxième partie amincie (110b), qui est sensiblement conique, et d'une troisième partie (110c), qui est sensiblement longitudinale et est destinée à être aménagée à l'intérieur du goulot.

11. Dispositif selon la revendication 10, **caractérisé en ce que** ladite deuxième partie (110b) est munie à l'extérieur de joints toriques (125) qui sont aménagés de manière coaxiale et sont espacées l'une de l'autre, pour permettre une adaptabilité hermétique du dispositif à des goulots de différentes tailles.

12. Dispositif selon les revendications 10 et 11, **caractérisé en ce que** ledit conduit traversant (121) comprend une partie droite (121a) qui est parallèle audit trou axial traversant (111) et passe à travers la troisième partie (110c) et la deuxième partie (110b) dudit corps, et se termine par une partie inclinée (121b) dans ladite première partie (110a).

13. Dispositif selon la revendication 12, **caractérisé en ce que** ladite partie droite (121a) du conduit (121) est munie d'un obturateur (125) dans ladite troisième partie (110c) et est néanmoins raccordée à l'extérieur par un trou radial (116) formé dans ladite troisième partie.

14. Dispositif selon une ou plusieurs des revendications 10 à 13, **caractérisé en ce que** ladite première partie (110a) est pourvue à l'avant d'une partie de couplage (127) pour une tête en forme de chapeau (128) formée d'un matériau non magnétique, munie d'une pluralité de trous radiaux (129) pour le passage du liquide.

15. Dispositif selon la revendication 14, **caractérisé en ce qu'**à l'intérieur de ladite tête (128) se trouve une bille (130), formée de verre ou d'argent, qui obture le trou axial (111) lorsque le dispositif est aménagé verticalement, sa première partie (110a) étant tournée vers le haut.

16. Dispositif selon une ou plusieurs des revendications précédentes, **caractérisé en ce qu'**il comprend un segment tubulaire (126) formé d'un matériau non magnétique qui est aménagé sur lesdits barreaux d'aimants permanent (122, 123) et est à même d'empêcher le contact entre lesdits barreaux (122, 123) et le liquide.
